Europäisches Patentamt

European Patent Office

Office européen des brevets

(19)

(11) **EP 1 189 432 A2**

(12) # EUROPEAN PATENT APPLICATION

(43) Date of publication:
**20.03.2002 Bulletin 2002/12**

(51) Int Cl.⁷: **H04N 5/00**, H04N 7/24

(21) Application number: **01116760.8**

(22) Date of filing: **20.07.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **14.08.2000 US 638287**

(71) Applicant: **MATSUSHITA ELECTRIC INDUSTRIAL CO., LTD.**
**Kadoma-shi, Osaka 571-8501 (JP)**

(72) Inventors:
• **Bhattacharya, Prabir**
  **Plainsboro, New Jersey 08536 (US)**
• **Hars, Laszlo**
  **Cortlandt Manor, New York 10567 (US)**

(74) Representative: **Schwabe - Sandmair - Marx**
**Stuntzstrasse 16**
**81677 München (DE)**

(54) **A hierarchical encryption scheme for secure distribution of predetermined content**

(57) A method is provided for distributing an electronic data set of predetermined content. The method includes partitioning the electronic data set into a plurality of files. The electronic data set has at least a first file which represents a version of the predetermined content. The plurality of files are differentially encrypted and distributed. The first encrypted file of the plurality of encrypted files is selected for decryption and the selected first encrypted file of the plurality of encrypted files is decrypted with a decryption key to recover the version of the predetermined content. The entire electronic data set is transmitted to a customer but only the decryption keys needed to decode a selected version are provided. Thus, the customer selects and pays for a version having desired qualities while encrypted data that may be used to recover all versions of the content. Higher quality versions of the content may be provided by transmitting only the keys needed to decode the higher quality versions in response the customer paying the appropriate fee.

FIG. 1

**Description**

BACKGROUND OF THE INVENTION

The invention relates to a secure framework for the distribution of an electronic data set. More particularly, this invention relates to a method of distributing predetermined electronic content as a hierarchy of separately encrypted files.

Content, such as music, images, text and video programming is increasingly distributed electronically via network such as a global information network (e.g. the Internet) or a recordable medium in the form of an electronic data set. The advent of DVD (digital versatile disc) technology and MP3 (MPEG audio layer 3) coding technology in particular has yielded electronic data capable of near perfect reproduction of the original content. Yet, often a consumer may not desire such high-quality electronic data. High-quality reproduction of predetermined content can be cost prohibitive, as many emerging technologies require upgraded and/or costly hardware components.

Additionally, piracy of electronic data has become especially burdensome to content providers and distributors of such high-quality electronic data. While piracy has plagued the industry since its inception, typically, the quality of the reproduction degrades with each successive generation. With digital content, however, the quality of the reproduced content is the same as the original. Thus, what may have been a single incident of copying for analog content may be the first step in a copying scheme that expands geometrically with each additional level.

Accordingly, there is a need for a distribution scheme in which varying levels of electronic data set resolutions can be readily and securely provided in a single package for distribution to consumers.

SUMMARY OF THE INVENTION

The present invention comprises a method of distributing an electronic data set representing predetermined content. The method comprises partitioning the electronic data set into a plurality of files. At least a first file represents a version of the predetermined content. The plurality of files are encrypted differently and distributed. At least one encrypted file of the plurality of encrypted files is selected for decryption based on a desired level of quality. The selected encrypted file is decrypted with a decryption key that is specific to the desired level of quality to recover the desired version of the predetermined content.

In another aspect of the present invention, a method is provided which comprises partitioning a digital electronic data set into a plurality of files, the plurality of files includes at least a first file which represents a first version of the predetermined content and a further file which represents a second version of the predetermined content. The plurality of files are processed through the application of a transfer function which results in a second version of the content.

According to another aspect of the invention, the second version of the content is processed through the application of a further transfer function to obtain a third version of the content having lesser quality than the second version and the various versions are separately encrypted. The encrypted plurality of files are distributed as a set.

According to yet another aspect of the invention and at least one compressed file of the plurality of compressed files is selected to be decrypted based on a desired level of quality. The selected one of the plurality of compressed files is decrypted using a decryption algorithm that is specific to the desired level of quality to recover a version of the predetermined content having the desired level of quality.

According to another aspect of the invention, the transfer function is a compression algorithm that produces a version of the content that may be represented in a fewer number of bits.

According to another aspect of the invention, the transfer function is a low-pass filter algorithm that reduces high-frequency components of the content.

According to another aspect of the invention, the further transfer function is a compression algorithm that produces a version of the content that may be represented in a fewer number of bits.

According to another aspect of the invention, the further transfer function is a low-pass filter algorithm that reduces high-frequency components of the content.

BRIEF DESCRIPTION OF THE SEVERAL VIEWS OF THE DRAWINGS

The foregoing summary as well as the following detailed description of preferred embodiments of the invention, will be better understood when read in conjunction with the appended drawings. For the purpose of illustrating the invention, there is shown in the drawings embodiments which are presently preferred. It should be understood, however, that the invention is not limited to the precise arrangements and instrumentalities shown. In the drawings:

Fig. 1 hierarchical tree diagram of differentially encoded files ($F_k$) of a package P in accordance with the present invention;

Fig. 2 is a block diagram of a hierarchical distribution scheme in accordance with the present invention;

Fig. 3 is a block diagram of a transfer function encoding system for encoding an input signal of predetermined content; and

Fig. 4 is a block diagram of a differential encoding system in accordance with Fig. 3 for differentially encoding an input signal of predetermined content.

DETAILED DESCRIPTION OF THE INVENTION

Certain terminology is used herein for convenience only and is not to be taken as a limitation on the present invention. The term "differential encoding" or "differentially translated" is defined as the process of encrypting data files and transmitting only the data corresponding to the difference between related encrypted files. The term "predetermined content" is defined broadly to include any audio, video, or textual based material. The term "augment" is defined as aggregating a first decrypted data file with the difference in quality between the first data file and a second related decrypted data file. In the drawings, the same reference numerals are used for designating the same elements throughout the several figures.

The present invention provides a method for distributing an electronic data set of predetermined content. The method comprises partitioning the electronic data set into a plurality of files. The electronic data set includes at least a first file which represents a version of the predetermined content. The plurality of files are encrypted differently and distributed. Each of the files or each selected combination of the files represents a version of the content having a different level of quality than any other file or selected combination of files.

One of the encrypted files or a combination of files from the plurality of encrypted files is selected for decryption and the selected first encrypted file or combination of files are decrypted with a decryption key provided in accordance with a fee structure to recover one of a plurality of versions of the predetermined content. In this way, a distribution scheme is provided in which varying levels of electronic data resolution can be securely provided in a single package.

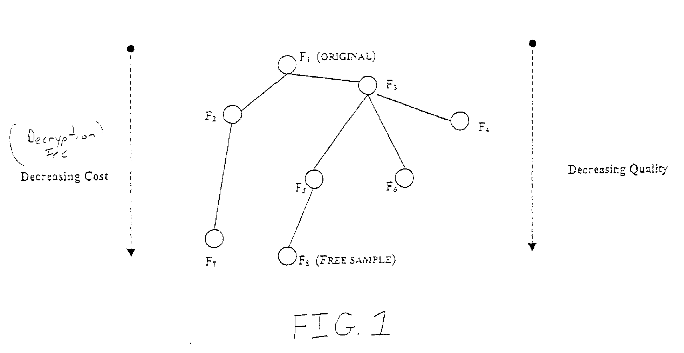

Referring now to the drawings, and more particularly Fig. 1, a heirarchical diagram in accordance with the present invention is shown. An electronic data set wherein predetermined content is represented in electronic form and partitioned into independent subsets (predetermined content typically being video, audio, lyrics, etc) is provided. Depending on the application, the subsets may have different spatial, color, time resolutions, or different compression levels. In Fig. 1, "F" denotes an illustrative one of these data subsets. $F_1$, $F_2$,....,$F_k$ denote variations of F with differing levels of quality to be distributed securely in accordance with the present invention. These files are arranged schematically at the nodes of a (graph theoretic) tree as shown in Fig. 1. The left margin shows the direction of decreasing cost (i.e., fee for purchasing versions from F; to $F_8$), the right margin shows decreasing quality from $F_1$ to $F_8$. The vertical position of the nodes corresponding to a relative level of file "quality" or resolution. The top-most node represents the best quality data (only eight nodes are shown for illustration purposes). The lower-most node $F_8$ represents a lowest quality of F. This version may, for example, be provided to consumers as a free sample.

In Figure 1, the symbol $F_1$ represents the version having the highest quality. It is contemplated that there may be several $F_n$ of quality levels, which are not further reduced by any lower quality version. In Fig. 1, in general, the lines connecting nodes $F_n$ and $F_m$ illustrate that if one is obtained from the other by a reduction in file quality. Following a path from a bottom-most node to the top of the tree, only the data corresponding to the difference of quality (i.e., differential encoding) has to be stored as a file F, a significant reduction in the amount of information to be transmitted to the consumer. The version of F recovered by the consumer is dependent upon a decryption key obtained from the distributor. The fee structure provides higher resolution versions for an increased cost. It is contemplated, moreover, that quality may be measured along multiple mutually orthogonal dimensions. For example, an audio recording may be processed both to reduce the resolution of the samples, which results in a version having less dynamic range, and/or to reduce the frequency spectrum of the recording. Processing along the multiple dimensions may be combined such that a reduced-resolution version may be further processed to provide a version having a lesser range of frequencies.

The encryption method employs keys which may be publicly distributed and or privately distributed as known to those skilled in the art for decrypting one or more files of a data set. Alternatively, differing versions of files F of a data set may be made available on a network such as the Internet through hyper text transfer protocol for example, whereby a decryption level is determined based on the presence of a particular digital certificate or detected cookie/browser based token for use in recovering a corresponding file version.

The data files themselves may, for example, be encrypted according to a symmetric encryption algorithm such as triple DES (data encryption standard) and the symmetric keys needed to decode the data may, themselves, be encrypted using a stronger encryption algorithm. One exemplary encryption technique for encrypting the keys is disclosed by U.S. Patent Application No. 5,497,423 entitled METHOD OF IMPLEMENTING ELLIPTICAL CURVE CRYPTOSYSTEMS IN DIGITAL SIGNATURES OR VERIFICATION AND PRIVACY COMMUNICATION the subject matter of which is incorporated herein by reference in its entirety for its teachings on data encryption. However, those skilled in the art recognize that the distribution scheme defined herein is not limited to a particular encryption algorithm. In a practical implementation, a user may be assigned a single key (e.g. a private key or digital certificate) by the provider. When a user selects a particular work, the provider transmits the entire set of files to the user, each file encrypted with a distinct symmetric key. In response to the selection of a specific version of the work, the provider encrypts and transmits only the key or keys that are needed to decode that version with the key that is specific to the user. These encrypted keys are decrypted by the user and used to decrypt the desired version of the work. A higher quality version of the work may be obtained by simply requesting and receiving the keys needed to decode that version at the user has all files for every version.

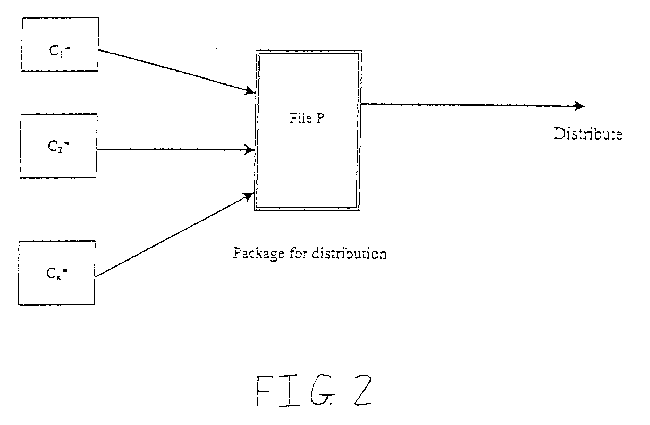

Referring now to Fig. 2, an embodiment is shown for securely distributing predetermined content in accordance with the present invention. Files $C_1$, $C_2$....., $C_k$ are created by partitioning predetermined content to be distributed in accordance with the present invention and encrypting the partitioned files.

$$F_n = C_n \text{ for leaves and } F_m = C_m + F_n \text{ for connected nodes} \qquad \text{(Equation 1)}$$

For connected nodes (+ represents an operation to augment two files). Where $C_1{}^*, C_2{}^*, ....., C_k{}^*$ are aggregated to form the file P which is securely distributed the file P as a single package. The package P can be directly transmitted to a consumer as an electronic data set, for example, via a network connection, or via a recordable medium such as a DVD (Digital Versatile Disc).

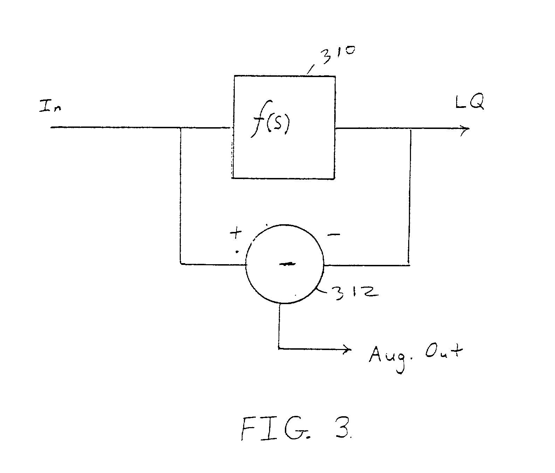

By way of example, Fig. 3 shows is a block diagram of a transfer function encoding system for encoding an input signal of predetermined content in a manner discussed above. The type of transfer function $f$(s) is dependent upon the input data to be processed and can be any encryption, compression, line filter or similar translation function known to those in the art. In the exemplary embodiment shown in Figure 3, the input signal is processed by the transfer function $f$(s) 310 to produce the lower-quality output data LQ. The data LQ is subtracted or otherwise removed from the input data by the differential means 312 to provide a differential data set Aug Out. To recover the original data (IN signal) the LQ (low quality signal) signal is augmented with the Aug Out signal. The augmentation operator (not shown) performs the inverse of the function performed by the differential means 312.

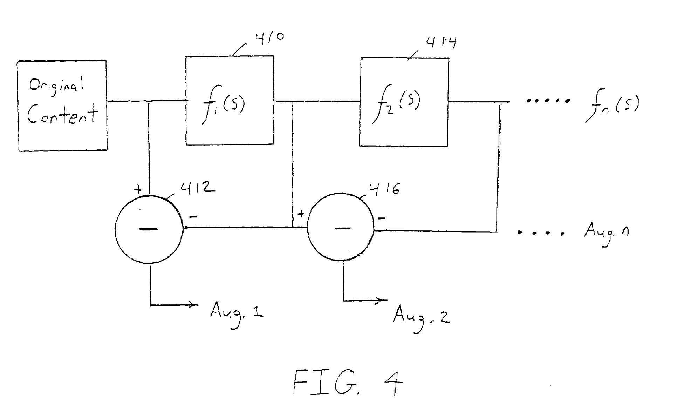

As shown in Fig. 4, a plurality of transfer functions f(s) can be cascaded to produce base data and augmentation data for several different versions. In Figure 4, the transfer function $f$(s) may be a compression function or a low-pass filter. In Fig 4, $Aug_1$ represents augmentation data provided by the differential means 412 that may be combined with the data provided by the transfer fanction $f_1$(s) 410 to reproduce the original content. In the same way, $Aug_2$ represents augmentation data provided by the differential means 416 that may be combined with the data provided by the transfer function $f_2$(s) 414 to reproduce the data set provided by the transfer function $f_1$(s) 410. It is contemplated that either the original content and the output data provided by each of the cascaded transfer functions may be provided as the separately encrypted files, or the output data provided by the last transfer function $f_n$(s) and each of the augmentation files may be provided as the separately encrypted files. In this instance the file provided by the last transfer function and all of the augmentation files up to the desired version would be needed to recover the desired version. In Fig. 4,

Upon reception of the entire file P, a consumer decrypts a specific quality or resolution of the original data set F in accordance with a provided decryption key(s), The resulting resolution of the data set F will depend upon the decryption key utilized, higher resolution decryption keys being provided by the distributor for a higher fee relative to low resolution decryption keys. For example, suppose that the consumer has paid for receiving the version $F_i$. In order to recover this version, the consumer decrypts certain files $C_{i1}{}^*, C_{i2}{}^*.....C_{ij}{}^*$. Then, using equation 1 above the consumer will recover $F_i$.

As can be appreciated, the distribution can provide low quality versions of predetermined content at a minimal cost for sampling purposes. Moreover, the form of equation (1) and the methods for creating the files $F_1$, $F_2$,.....,$F_k$ can be made public at the discretion of the distributor.

It will be appreciated by those skilled in the art that changes could be made to the embodiments described above without departing from the broad inventive concept thereof. For example, the proposed distribution method while primarily disclosed for audio/video applications, should be applicable to any electronic file distribution. It is underestood, therefore, that this invention is not limited to the particular embodiments disclosed, but is intended to cover modifications within the spirit and scope of the present invention.

For example, the version desired by the customer may not be explicitly selected but be determined as a function of the decoding hardware that the customer is using. For example, a particular audio player may be able to reproduce signals in the range of 10 Hz to 12 000 Hz. If the content provider knows the type of player being used, only a version appropriate for that player may be provided. In this instance, the customer would receive the entire file set containing data for all possible versions but receive only the keys needed to decode the version that is band-limited to 12 000 Hz.

In addition, while the transfer function f(s) has been described in terms of dynamic range compression and frequency-band compression, other types of compression are contemplated. For example, if the content being distributed is a dictionary, the transfer function may selectively delete words based on their relative frequency of use such that the data provided by the final cascaded transfer function is only the most frequently used words and the augmentation data sets include entries for words that are used less and less frequently.

**Claims**

1. A method of distributing an electronic data set representing predetermined content, the method comprising:

    partitioning the electronic data set into a plurality of files, including at least one file which represents a version of the predetermined content;

    encrypting the plurality of files differently;

    distributing the encrypted plurality of files;

    selecting the one encrypted file of the plurality of encrypted files to decrypt;

    receiving a decryption key specific to the one encrypted file responsive to the selection; and

    decrypting the selected first encrypted file of the plurality of encrypted files using the decryption key to recover the version of the predetermined content.

2. A method according to claim 1 further including the step of :

    decrypting a further file of the plurality of files and augmenting the decrypted one encrypted file with the decrypted further file to recover an augmented version of the predetermined content.

3. A method according to claim 2 wherein the one file is encrypted according to a symmetric encryption algorithm using a first key and the further file is encrypted according to the symmetric encryption algorithm using a second key different from the first key.

4. A method according to claim 3, wherein the first key and the second key are encrypted with an asymmetric encryption algorithm using a key that is peculiar to a customer.

5. A method of claim 4 wherein the key used by the asymmetric encryption algorithm is a digital certificate.

6. A method according to claim 1 wherein the encrypted plurality of files are distributed in digital versatile disc (DVD) format.

7. A method according to claim 1 wherein the encrypted plurality of files are distributed via a global information network.

8. A method of claim 1 wherein the electronic data set is audio data and the step of partitioning the electronic data set into a plurality of files, including at least one file which represents a version of the predetermined content includes processing the audio data through a cascade connection of low-pass filters, each low-pass filter having a smaller pass-band than previous low-pass filters in the cascade connection.

9. A method according to claim 1 wherein the electronic data set is audio data and the step of partitioning the electronic data set into a plurality of files, including at least one file which represents a version of the predetermined content includes processing the audio data through a cascade connection of compression filters, each compression filter providing output samples having fewer digital bits than corresponding input samples.

10. A method according to claim 1 further including the step of distributing the encrypted plurality of files as a single package.

11. A method of distributing an electronic data set representing predetermined content in digital form, the method comprising:

partitioning the electronic data set into a plurality of files, including at least a first file which represents a first version of the predetermined content and a further file which represents a second version of the predetermined content;

encrypting the plurality of files in accordance with a first encryption algorithm;

encrypting at least the second version in accordance with a second encryption algorithm;

distributing the encrypted plurality of files;

selecting at least one encrypted file of the plurality of encrypted files to decrypt; and

decrypting the selected one of the plurality of encrypted files with the first decryption algorithm to recover the first version of the predetermined content.

12. A method according to claim 11 further including the step of :

decrypting the second version in accordance with a second decryption algorithm, corresponding to the second encryption algorithm, and augmenting the decrypted second version with the decrypted first version to recover an augmented second version of the predetermined content.

13. A method according to claim 11 wherein the second version is of a lower resolution than the augmented second version.

14. A method according to claim 13 wherein the second version is of a narrower bandwidth than the augmented second version.

15. A method according to claim 11 wherein the step of partitioning the partitioning the electronic data set into a plurality of files, including at least a first file which represents a first version of the predetermined content and a further file which represents a second version of the predetermined content includes processing the predetermined content according to first and second orthogonal transfer functions each of which produces output data having lower quality than the predetermined content.

$F_1$ (ORIGINAL)

$F_3$

$F_2$

$F_4$

$F_5$

$F_6$

$F_7$

$F_8$ (FREE SAMPLE)

Decreasing Cost

(Decryption Fee)

Decreasing Quality

FIG. 1

$C_1^*$

$C_2^*$

$C_k^*$

File P

Package for distribution

Distribute

FIG. 2

FIG. 3.

FIG. 4